# EUROPEAN PATENT APPLICATION

(11) **EP 1 721 526 A1**
(43) Date of publication of application: **15.11.2006**
(21) Application number: 04819956.6
(22) Date of filing: 06.12.2004
(51) Int. Cl.: A21D 2/26

(54) **BREAD IMPROVING AGENT AND BREADS CONTAINING THE SAME**

(30) Priority: 04.12.2003 JP 2003405318
(71) Applicant: Fuji Oil Company, Ltd., Osaka-shi, Osaka 542-0086 (JP)
(72) Inventor: YOKOHAMA, Hitoshi, c/o Fuji Oil Comp., Hannan, Oaska 598-8540 (JP); KOSEKI, Takaya, c/o Fuji Oil Comp., Hannan Factory, Osaka 598-8540 (JP)
(74) Representative: Hayes, Adrian Chetwynd
(86) International application number: PCT/JP2004/018117
(87) International publication number: WO 2005/053410

(57) **Abstract**

It is intended to provide a bread improving agent with which bread having an improved fermented flavor and an improved texture can be produced within a short period of time, and a process for producing breads by using the same. It is found out that by adding fermented soybean protein, which is obtained by preliminarily fermenting soybean protein such as soybean milk with the use of a yeast, to a bread dough, the resulting baked bread has an extremely favorable fermented flavor and a preferable and soft texture maintained over a long period of time without taking a long time for the fermentation.

## Description

### Technical Field

The present invention relates to a bread improving agent with which bread having an improved fermented (leavened) flavor and a long-lasting soft texture can be produced by a simplified bread production process, and a process for producing bread by using the same.

### Background Art

Usually, conventional bread have been produced by mixing main ingredients such as flour, yeast, salt and water, with additional ingredients such as sugar, dairy products and fats and oils or food additives to make dough, fermenting the dough, subjecting the fermented dough to finishing steps (dividing, rounding, intermediate proof, molding, panning and final proof) and baking the dough. Conventionally known bread production processes include straight dough method, sponge dough method, liquid sponge method, quick mix method, and the like.

In a straight dough method (sometimes referred to as straight method), the above steps are performed by a series of operations. Although the entire flour is thoroughly matured and the resulting bread has an excellent fermented flavor in this method, the operations lack flexibility because mixing conditions such as temperature and hardness of dough are hardly changed. Therefore, quality of the products tends to fluctuate during mixing. This tendency becomes more remarkable when a yeast strain having a longer fermentation time is used. Further, the resulting bread has disadvantages such as low rising, a rather harder texture, and early retrogradation.

A sponge dough method is preformed by a two-step fermentation process in which a portion of flour is previously fermented to prepare sponge dough, and then the remaining ingredients are added to the dough. Since the mixing of the dough can be controlled in accordance with the state of the sponge dough, the operations have flexibility and the resulting bread rises high and has a soft texture. However, this method requires a longer fermentation time, which tends to cause excessive fermentation and is apt to impair the flavor of the bread. Further, since the dough is not thoroughly matured, a fermented flavor is inferior to that produced by a straight dough method.

In a liquid sponge method, fermentation time of dough is remarkably reduced by mixing a "liquid sponge", which has been prepared by fermenting a sugar or the like with yeast beforehand in a liquid state, with dough, and fermenting the dough for a short period of time to produce bread. This method is advantageous for mass production of bread because bread can be quickly produced within a short period of time and quality is hardly fluctuated, when a liquid sponge has been prepared beforehand. On the other hand, the production and quality control of a liquid sponge is as difficult as the process control in a straight dough method, and very advanced techniques are required to prepare a liquid sponge having stable quality. Further, flour itself is fermented only for a short period of time, which results in such a disadvantage as a poor fermented flavor.

In a quick mix method, generally, the preliminary fermentation step is omitted from the steps of a straight dough method, and dough prepared by mixing ingredients is molded immediately, fermented in a final proof, and then baked. As the preliminary fermentation step is omitted from a bread production process, bread can be produced within a short period of time, and thus has been often used for producing frozen bread dough. However, since fermentation time of this method is very short, this method also causes a poor fermented flavor.

Thus, any of conventional bread production processes has both advantages and disadvantages. Then, either the fermented flavor or the workability of bread must have been sacrificed in a conventional method. In particular, when a yeast strain that grows slowly and requires a longer fermentation time is used, the disadvantages tend to become more significant.

In the previous application (Patent document 1), we have disclosed a bread improving agent comprising a combination of a lactic-fermented soybean protein containing solution and soluble polysaccharides. According to the invention of this application, it has been possible to obtain bread having a long-lasting soft texture without adding an emulsifier to improve texture and workability of bread.

However, the need for more soft textures is still high, and the original fermented flavor of bread can not be improved by the above method. Further, sometimes, an excessive addition of the agent causes a yogurt-like flavor quite different from a fermented flavor of bread. Thus, bread which has both improved fermented flavor and improved texture is not yet obtained by fermentation in a short period of time.

Incidentally, Patent document 2 discloses the production of bread having good dough properties, and an excellent baked shape, texture and fermented flavor by addition of a bread improving agent comprising any one of malt, a rice fermented product or a wheat fermented product and biotin as an essential ingredient and further addition of a lactic/yeast fermented product of soybeans to the agent. However, the amount of the fermented product of soybeans added is as very small as about 0.01 to 0.2% based on flour (0.012% in Examples), and there is no substantial disclosure of a favorable fermented flavor of yeast and improvement of a soft texture, which are the objects of the present invention, in this document. Further, since the fermented product of soybeans is prepared by fermenting a defatted soybean powder containing "okara (soy pulp)", the effects of a fermented product mainly composed of soybean protein on bread are unknown.

Accordingly, it has been desired to develop a bread improving agent which improves both texture and fermented flavor and permits the stable production of bread within a short period of time, thereby producing tasty bread without a burden on a bakery.
(Reference Documents)
Patent document 1: JP 2001-299194 A
Patent document 2: JP 2000-300156 A

### Disclosure of the Invention

### Problem to be Solved by the Invention

An object of the present invention is to provide a bread improving agent with which bread having an improved fermented flavor and an improved texture can be produced within a short period of time, and a process for producing bread.

### Means for Solving the Problem

The present inventors have intensively studied to solve the above problem, and found that a remarkably favorable fermented flavor and a long-lasting soft texture can be given to bread after baking without taking a long period of time for fermentation by addition of fermented soybean protein, which is obtained by previously fermenting soybean protein such as soybean milk with lactic acid bacteria and yeast to bread dough, and that unexpectedly higher effects can be achieved as compared with addition of lactic-fermented soybean milk to bread. Thus, the present invention has been completed.

That is, the present invention relates to:
(1) A bread improving agent comprising fermented soybean protein fermented by lactic acid bacteria and yeast;
(2) The bread improving agent of the above (1), wherein the lactic fermentation is performed substantially simultaneously or before the yeast fermentation;
(3) The bread improving agent of the above (1), wherein the lactic acid bacteria used for the lactic fermentation is derived from sour leaven;
(4) The bread improving agent of the above (1), wherein the fermented soybean protein is obtained by further reacting a protease with the soybean protein;
(5) The bread improving agent of the above (1), which has a pH of 4.0 to 4.8;
(6) The bread improving agent of the above (1), which is sterilized;
(7) Bread comprising the bread improving agent of the above (1);
(8) The bread of the above (7), wherein the bread improving agent is added in an amount of 0.35 to 3.5 parts by weight in terms of a soybean solid content based on 100 parts by weight of cereal flour for bread; and
(9) A process for producing bread which comprises mixing fermented soybean protein fermented by lactic acid bacteria and yeast with cereal flour for bread to prepare dough.

### Effect of the Invention

According to the present invention, it is possible to produce bread having an excellent fermented flavor and a long-lasting soft texture by fermentation for a short period of time without requiring long time fermentation of bread dough, and without adverse influence on the workability of bread production. It is possible to remarkably reduce the time required for a bread production process with keeping the excellent fermented flavor and soft texture. Further, when the improving agent is used, the resulting bread can keep for a longer period of time. Furthermore, when the improving agent is used in bread to be subjected to a frying step such as fried bread and doughnuts, the agent prevents the bread from absorbing oil.

### Best Mode for Carrying Out the Invention

Hereinafter, the present invention will be specifically illustrated. The bread improving agent of the present invention comprises soybean protein fermented with lactic acid bacteria and yeast.

Any soybean protein can be used as an ingredient to be fermented in the present invention as long as it is a soybean-derived material containing soybean protein, and examples of the soybean protein include whole soybeans, defatted soybeans, soybean milk, soybean protein isolate, concentrated soybean protein, and the like. Particularly preferred soybean protein is soybean protein isolate and soybean milk that have been extracted from whole or defatted soybeans and have an increased soybean protein content. Particularly, soybean milk is preferred because it contains a whey component and is rich in nutrient sources required for fermentation such as oligosaccharides. Soybean milk is not specifically limited, and includes whole and defatted soybean milk and dry powder thereof. In view of a flavor and the like, whole soybean milk is preferred. Soybean protein isolate can also be used as an oil-in-water emulsion by homogenizing oil and water.

In general, whole soybean milk is prepared by soaking soybeans in water, hot water or boiling water to swell to have a water content of about 50%, grinding, heating, and removing "okara". In view of a flavor, it is more preferable to use soybean milk prepared by pulverizing swollen soybean to an average particle size of 20 to 100 µm using shearing force of a rotary knife cutter, if necessary followed by homogenizing using a homogenizer or other equipment, and separating the milk by a conventional method such as centrifugation, filtration, etc. According to this method, the particle size is so small that there is no problem of texture even when slurry of soybean milk and "okara" is used without removal of "okara" as described hereinafter. Defatted soybean milk is prepared from defatted soybean by the same process as that of whole soybean milk. An oil-in-water emulsion can be prepared by homogenizing this defatted soybean milk and oil together. Examples of the oil to be used include known fats and oils such as those of vegetable and animal origin, and processed products thereof.

For the purpose of the improvements in physical properties and the enrichment of nutrients, soybean protein may be reacted with a desired enzyme such as transglutaminase, protease, amylase, β-glucosidase, xylanase, etc. The timing of the reaction is not specifically limited, and an enzyme may be reacted with soybean protein at any time from the preparation of soybean protein to after fermentation with lactic bacteria and yeast.

In the present invention, among the enzymes, a protease is most preferable for the reaction with soybean protein. It is possible to give a tasty component to fermented soybean protein by hydrolyzing soybean protein to generate a suitable amount of peptides as well as to enhance good flavor of yeast by accelerating fermentation with yeast. Therefore, the particularly preferred timing is to react a protease with soybean protein so that yeast can utilize peptides as a nutrient source for fermentation. That is, a protease is preferably reacted with soybean protein, for example, during the preparation of soybean protein, after the preparation of soybean protein and before the yeast fermentation of the soybean protein, or at the same time of the fermentation with yeast.

When a protease is reacted, any of endo-type proteases and exo-type proteases can be used, but an exo-type protease is more preferable for enhancing a tasty component produced by hydrolysis.

Soybean protein is preferably hydrolyzed to such an extent that soybean protein has solubility in TCA (trichloroacetic acid) of 10 to 30%, more preferably 15 to 30%. The amount, titer and reaction conditions of a protease can be appropriately adjusted so that the solubility is within this range. The solubility in TCA is an index of a decomposition rate of protein, and is a value determined by dispersing protein powder in water to obtain a protein content of 1.0% by weight, thoroughly stirring the dispersion and measuring a proportion of 15% TCA-soluble protein to the total protein by a protein determination method such as Kjeldahl or Lowry method. If the solubility is lower than the above range, the effect of the addition of a protease is insufficient. And if it exceeds the above range, the effect of the addition of a protease is hardly enhanced. On the contrary, too much amino acids and peptides are formed and apt to affect the physical properties and flavor of bread dough.

The soybean solid content in the bread improving agent is suitably 15% by weight or more, more preferably 40% by weight or more, and most preferably 55% by weight or more based on a dry solid content, though the effect of the addition may somewhat vary with the amount of the improving agent to be added to bread dough. The upper limit of the soybean solid content is not higher than a solid content from which those of necessary ingredients other than soybean protein to be added and lactic acid bacteria and yeast are subtracted, and is usually 98% by weight or less in the dry solid content. If the soybean solid content in the bread improving agent is too low, the growth of yeast seeded in soybean protein at the time of fermentation tends to decline, which results in insufficient development of the desired fermented flavor and less improvement in the flavor and texture. Further, the lower the soybean solid content, the more the bread improving agent must be added to bread dough so as to achieve the desired addition effect. This adversely influences on physical properties of dough.

Incidentally, if a dairy ingredient such as caw milk is used as an ingredient to be fermented instead of soybean protein, bread dough is too softened when the dairy ingredient is added thereto, which results in unfavorable workability such as poor moldability. Further, the resulting flavor is not a favorable fermented flavor of bread but an unfavorable yogurt-like flavor.

In the present invention, it is essential to ferment soybean protein with both lactic acid bacteria and yeast. Fermented soybean protein obtained by fermentation with lactic acid bacteria alone cannot give a sufficient favorable fermented flavor with a tasty flavor to bread. On the other hand, in casa of fermented soybean protein obtained by fermentation with yeast alone, yeast cannot sufficiently grow because yeast probably requires metabolites of lactic fermentation. As a result, the improvement of the fermented flavor is insufficient and the soft texture of bread is hardly obtainable.

Suitable examples of the lactic acid bacteria used for the preparation of the fermented soybean protein include common lactic acid bacteria used in conventional fermented milk *(Lactobacillus bulgaricus, Lactobacillus acidophilus, Lactobacillus helveticus, Lactobacillus lactis, Lactobacillus plantarum, Streptococcus thermophilus, Streptococcus lactis, Streptococcus cremoris, Streptococcus diacetilactis, Leuconostoc cremoris,* etc.) and those derived from sour leaven, which is a kind of leaven (rye sour leaven, San Francisco sour leaven, panetone sour leaven, etc.). Examples of the lactic acid bacteria derived from sour leaven include *Lactobacillus sanfranciscensis, Lactobacillus panex, Lactobacillus comoensis, Lactobacillus italicus, Lactobacillus brevis, Lactobacillus fermentum, Lactobacillus delbrucckii, Lactobacillus leichmannii, Lactobacillus curvatus, Lactobacillus brevis, Lactobacillus hilgardii, Lactobacillus casei, Lactobacillus reuteri, Lactobacillus pastorianus, Lactobacillus buchneri, Lactobacillus cellobiosus, Lactobacillus fructivorans,* and the like.

The lactic acid bacteria are seeded either alone or in combination of two or more thereof, and the fermentation temperature and time are selected in accordance with particular stains of lactic acid bacteria and yeast to be combined with them. For example, the temperature is generally 15°C to 50°C and the fermentation time is about 1 hour to 1.5 days, but these conditions are not limited to a specified range because they will vary in accordance with particular strains of lactic acid bacteria and yeast, thus a practitioner can select the temperature and time conditions in consideration of the desired degree of the fermented flavor and workability. The pH at the initiation of fermentation is adjusted to a range at which lactic acid bacteria and yeast can grow. The pH is usually adjusted to within a range of 5.5 to 8.5, more preferably 5.5 to 7, before the initiation of the fermentation.

The pH after the fermentation is preferably 4.0 to 4.8, more preferably 4.3 to 4.6. If the pH is lower than the above range, an odd taste is apt to generate due to excess fermentation, and dough is apt to be too softened by the formation of an excessive amount of lactic acid, resulting in lowering of workability. On the other hand, if the pH is too high, the improvement of the fermented flavor and soft texture is insufficient, and storability is deteriorated.

The yeast used for the preparation of the fermented soybean protein may be that usually used as a leaven, and not specifically limited. The yeast is used either alone or in combination of two or more, and the fermentation temperature and time are selected in accordance with particular stains of yeast and lactic acid bacteria combined with it.

The strain of yeast is not specifically limited, but examples of the yeast include, in addition to conventional yeast *(Saccharomyces cerevisiae),* those derived from sour leaven used as a kind of leaven, such as San Francisco sour leaven, rye sour leaven and panetone leaven, and those derived from hop yeast, beer yeast, sake yeast, fruit yeast such as grape and apple yeasts. Sour leaven or the like containing both yeast and lactic acid bacteria can complete fermentation without the need for adding additional lactic acid bacteria, thus they are preferable in view of operation steps. Examples of the yeast derived from sour leaven include *Saccharomyces exiguus, Candida milleri, Pichla saitoi, Candida krusei,* etc.

The present invention is also useful for using such leaven that requires considerable maturing time for producing a sufficient fermented flavor in case of using a conventional production process, wherein yeast and lactic acid bacteria are directly added to bread dough.

For example, if panetone leaven is directly added to bread dough, the unique fermented flavor of panetone leaven can not be sufficiently produced unless fermentation is carried out at about 20°C for as long as 20 hours. Although attempts have been made to impart a fermented flavor to bread by mixing bread dough with a liquid sponge that has been matured for long time in a liquid culture mainly composed of flour, the preparation of the liquid sponge itself is difficult to control and requires a sophisticated technique. Further, since the effect of the liquid sponge for imparting a fermented flavor is insufficient, the liquid sponge should be fermented for a long period of time in bread dough to produce a sufficient fermented flavor that the present invention intends to achieve.

On the other hand, the fermented soybean protein of the present invention requires no or a shorter-time fermentation process to impart bread a favorable fermented flavor and a soft texture equivalent to those obtained with a long-time fermentation process. Further, the bread can be sterilized for marketing, which permits long-term storage.

In the present invention, the reaction of lactic acid bacteria and yeast with the soybean protein is preferably performed in the order that lactic fermentation is performed substantially at the same time of or before yeast fermentation. That is, although the order of seeding lactic acid bacteria and yeast is not specifically limited, the temperature and pH of the ingredient to be fermented and kinds of other ingredients such as saccharides should be adjusted so that at least lactic fermentation proceeds at the same time of or before yeast fermentation.

The reason for this is not clear. However, it is considered that, according to the above order of the reaction, perhaps, lactic acid bacteria is reacted with the soybean protein as a first fermentation to form various fermentation products such as lactic acid, peptides, amino acids, etc., and then these products are used by yeast as their nutrient sources to accelerate their growth, thereby producing a favorable fermented flavor which is hardly obtainable by a conventional bread production process. Then, when yeast fermentation is performed under such conditions that lactic fermentation is substantially insufficient, a sufficient favorable fermented flavor can hardly be obtained.

In the present invention, other desired ingredients suitable for fermentation can be added together with the soybean protein in accordance with strains and combinations of lactic acid bacteria and yeast to be used. For example, peptides, cereal flour, assimilable saccharides, fats and oils, polysaccharide thickeners, dairy ingredients, dietary fiber, vitamins, minerals and other known fermentation accelerators can be added.

Examples of the peptides include peptides of vegetable origin such as soybean peptides, wheat peptides, etc., and peptides of animal origin, and they can be used as a fermentation accelerator for lactic acid bacteria and yeast. The amount of them to be added is preferably 0.01 to 0.5% by weight, more preferably 0.03 to 0.3% by weight based on the dry solid content of the bread improving agent.

Examples of the cereal flour include whole grain, strong flour, weak flour, rice powder and corn flour, and the amount thereof to be added+ is preferably 0.2 to 3% by weight, more preferably 0.3 to 2% by weight based on the dry solid content of the bread improving agent. Particularly when using panetone leaven, cereal flour is preferably used for accelerating fermentation and developing a favorable fermented flavor.

Examples of the assimilable saccharides include glucose, maltose, malto-oligosaccharides, sucrose, galactose, galacto-oligosaccharides, xylose, xylo-oligosaccharides, lactose, lacto-oligosaccharides, mannose, manno-oligosaccharides, soybean oligosaccharides such as raffinose and stachyose, trehalose, etc. These saccharides can be appropriately used in accordance with sugar utilization by the lactic acid bacteria and yeast to be used. For example, when panetone leaven is used, glucose or maltose is more preferable to use. The amount thereof to be added is preferably 0.5 to 5% by weight, more preferably 1 to 3% by weight based on the dry solid content of the bread improving agent.

The polysaccharide thickener is added to impart stability to the fermented soybean protein, and examples thereof include native gellan gum, locust bean gum, xanthan gum, water-soluble soybean polysaccharide, pectin, guar gum, etc. The amount thereof to be added is preferably 0.01 to 2% by weight, more preferably 0.03 to 1.5% by weight based on the dry solid content of the bread improving agent.

Examples of the dairy ingredients include skimmed milk powder, while milk powder, milk whey, WPC, etc., and the amount thereof to be added is preferably 0.1 to 3% by weight, more preferably 0.2 to 2.5% by weight based on the dry solid content of the bread improving agent.

The fermented soybean protein prepared as described above is, if necessary, mixed with a pH adjuster and other ingredients, and the resulting mixture can be used as the bread improving agent. When producing bread, bread manufacturers can mix the bread improving agent with bread flour by a known bread production process such as straight dough method or sponge dough method to produce bread. Of course, manufactures can prepare the fermented soybean protein by themselves to produce bread.

The bread improving agent of the present invention may coagulate to become curd with the lowering of pH due to the lactic fermentation and carbon dioxide and ethanol formed by the yeast fermentation. Then, it is preferable to homogenize the agent with a homogenizing means such as a homogenizer in consideration of workability during bread production and heat sterilization as described below to maintain the agent in a liquid state.

The bread improving agent of the present invention is more preferably sterilized. The sterilizing means is not specifically limited, but heat sterilization is preferable in view of productivity. When lactic acid bacteria are alive in the bread improving agent, lactic fermentation may proceed excessively during the fermentation of bread dough to increase the acidity of dough. When the acidity is increased and lactic acid is excessively produced, the pH of bread dough becomes too low during mixing, which causes excess softening of gluten, thereby resulting in extreme deterioration of the workability of bread. Further, when yeast is alive in the bread improving agent, they produce carbon dioxide even during the fermentation of bread dough, which not only tends to increase the acidity, but also may cause excess leavening of bread dough, thereby deteriorating its workability. Therefore, when the bread improving agent is sterilized, no growth of lactic acid bacteria and yeast occur during the fermentation of bread dough, and the reaction of the agent on bread dough is stabilized. Heat sterilization is performed either by low-temperature sterilization generally at 70°C or higher or by high-temperature sterilization at 100°C or higher, and examples of the sterilizers include indirect sterilizers using plate-type heat exchangers, direct sterilizers by directly blowing steam, autoclaves for products packed in containers, and the like.

The bread improving agent of the present invention can be supplied in a liquid state. Alternatively, it can also be supplied as spray-dried or freeze-dried powder.

The bread improving agent of the present invention can be added to bread dough as it is. Alternatively, it can be added to bread dough as a water-in-oil emulsion such as margarine prepared by emulsifying an aqueous phase containing the agent with an oil phase, or as an oil-in-water emulsion such as cream prepared by emulsifying an oil phase containing the agent with an aqueous phase. In addition, the agent can be added to shortening or the like, and then added to bread dough as an emulsified fat composition.

Hereinafter, bread produced using the above bread improving agent will be illustrated.

The bread of the present invention is characterized in that the above bread improving agent is added during the production thereof. Examples of bread flour to be used in bread dough include conventionally used ones such as flour, whole grain meal rice powder, etc. Flour is not limited to specific types such as strong flour, medium-strength flour, etc.

Suitably, the amount of the bread improving agent of the present invention to be added to bread is usually 0.35 to 3.5 parts by weight, more preferably 0.7 to 2.2 parts by weight in terms of the soybean solid content per 100 parts by weight of bread flour. When the amount is lower than 0.35 part by weight in terms of the soybean solid content, the fermented flavor and soft texture are not sufficiently improved. When the amount exceeds 3.5 parts by weight, the soybean protein contained in the improving agent hinders the formation of a gluten network in bread dough. Then, rising of bread tends to be poor and bread dough tends to be excessively softened.

Bread can be produced by using a conventional process such as straight dough method, sponge dough method, liquid sponge method, quick mix method, etc. For example, bread can be produced by preparing bread dough by mixing the bread improving agent with bread flour, further fermenting the dough for rising if necessary, and heating the dough by baking, steaming or flying.

While bread dough can be prepared by mixing the bread improving agent and bread flour together with main ingredients such as bread yeast, salt, water, etc. using a conventional process, other secondary materials such as salt, water, yeast food and, if necessary, fats and oils (e.g. shortening, lard, margarine, butter, liquid oil, etc.), dairy products, saccharides, flavoring materials (e.g. glutamic acid, nucleic acids), chemical leavening agent, flavor, etc. may be added and mixed.

Bread can be obtained by subjecting this dough to baking, etc., after fermentation. The dough can be frozen beforehand to prepare frozen bread dough for later production of bread.

The bread obtained as above includes ordinary bread, special bread (e.g. grissini, muffin, rusk, etc.), fried bread (e.g. fried dough stick, doughnut, etc.), sweet buns, steamed bread (e.g. buns with meat fillings, sweet bean paste, etc.), pancakes, etc. Incidentally, when the bread improving agent of the present invention is used in fried bread, the agent prevents oil absorption to suppress excess ingestion of lipid.

The bread thus obtained has an extremely favorable fermented flavor derived from fermentation with both lactic acid bacteria and yeast of the bread improving agent, which is equal to or better than that of bread obtained after maturing for a long period of time. Further, the bread has a soft texture and a favorable storability that conventional bread do not have. Furthermore, in spite of having such a fermented flavor, the fermentation of bread dough can be completed within a shorter period of time, or the bread dough can be swelled without fermentation. Therefore, bread having an excellent fermented flavor can be produced very efficiently. Moreover, the bread has a soft texture that lasts for a longer period of time. Therefore, the process of the present invention can achieve a softening effect even when all ingredients are of natural origin without any food additives such as emulsifiers and enzyme preparations, etc. which have been conventionally used for obtain a soft texture.

The following Examples further illustrate the advantageous effects of the present invention, but they are mere examples and do not limit the technical concepts of the present invention. In the following Examples, all the parts and percents are by weight.

### Examples

### Example 1

### Bread improving agent using panetone leaven

Commercially available soybean milk (solid content 9% by weight) was heat-sterilized at 142°C for 5 seconds, and cooled to 30°C. To 80 parts of the soybean milk, 2 parts of a panetone leaven solution (containing *Lactobacillus panex, Lactobacillus sanfransisco* and *Saccharomyces exiguus,* and having a solid content of 30% by weight (manufactured by PANEX Co., Ltd)), 2 parts of glucose, 1 part of flour, 0.5 part of water-soluble soybean polysaccharides (SOYAFIVE, manufactured by Fuji Oil Company, Limited), 0.5 part of skimmed milk powder, 0.1 part of soybean peptide (HINUTE, manufactured by Fuji Oil Company, Limited) were added, and water was added to make the total amount 100 parts, and then fermented in a tank at 30°C until the pH reached 4.4. The fermentation time was about 24 hours. Then, the mixture was cooled to 7°C using a plate-type heat exchanger to prepare fermented soybean protein. It was homogenized at pressure of 100 kg, and heat-sterilized at 90°C for 60 seconds to obtain a bread improving agent [A] (dry solid content was 11.9% by weight, soybean solid content was 7.2% by weight).

Bread improving agents [B], [C] and [D] were prepared according to the same manner as that of [A] except that the amounts of the commercially available soybean milk were changed from 80 parts to 6, 20 and 40 parts, respectively, and the remaining volumes were made up with water. The dry solid contents of them were 5.2% by weight, 6.5% by weight and 8.3% by weight, respectively, and the soybean solid contents were 0.54% by weight, 1.8% by weight and 3.6% by weight, respectively.

### Example 2

Use of fermented soybean protein without sterilization A bread improving agent [E] was prepared according to the same manner as that of the improving agent [A] in Example 1 except that the fermented soybean protein was not sterilized.

### Example 3

Study of strains of lactic acid bacteria and yeast Fermented soybean protein was prepared according to the same manner as that of the improving agent [A] in Example 1 except that 1 part of a powdered culture of *Lactobacillus sanfransisco* derived from sour leaven as lactic acid bacteria and 1 part of *Saccharomyces cerevisiae* as yeast were added together instead of the panetone leaven solution and the mixture was heat-sterilized according to the same manner to obtain a bread improving agent [F].

### Example 4

Study of order of lactic and yeast fermentation (1) Fermented soybean protein was prepared according to the same manner as that in Example 3 except that lactic acid bacteria were reacted first, then yeast was reacted for 12 hours after the pH of the soybean milk dropped to 4.4, and the mixture was heat-sterilized according to the same manner to obtain a bread improving agent [G].

### Comparative Example 1

Study of order of lactic and yeast fermentation (2) Fermented soybean protein was prepared according to the same manner as that in Example 3 except that yeast was reacted first for 16 hours, then lactic acid bacteria were reacted, and the mixture was heat-sterilized according to the same manner to obtain a bread improving agent [H].

### Comparative Example 2

Fermented soybean protein prepared by lactic fermentation alone

Fermented soybean protein was prepared according to the same manner as that in Example 3 except that only lactic acid bacteria were added and no yeast was used, and the mixture was heat-sterilized according to the same manner to obtain a bread improving agent [I].

### Comparative Example 3

Fermented soybean protein prepared by yeast fermentation alone

Fermented soybean protein was prepared according to the same manner as that in Example 3 except that only yeast was added alone and no lactic acid bacteria were used, and the mixture was heat-sterilized according to the same manner to obtain a bread improving agent [J].

### Comparative Example 4

Use of fermented milk

Fermented milk was prepared according to the same manner as that in Example 3 except that milk was used instead of soybean milk, and the mixture was heat-sterilized according to the same manner to obtain a bread improving agent [K].

### Example 5

Study of strain of lactic acid bacteria

Fermented soybean protein was prepared according to the same manner as that in the improving agent [A] of Example 1 except that 1 part of a powdered mix culture of *Lactobacillus acidophilus, Lactobacillus bulgaricus* and *Streptococcus thermophilus* as lactic acid bacteria, and 1 part of *Saccharomyces cerevisiae* as yeast were used instead of panetone leaven, and the mixture was heat-sterilized according to the same manner to obtain a bread improving agent [L].

### Example 6

Study of protease addition

Commercially available soybean milk (solid content 9% by weight) was heat-sterilized at 142°C for 5 seconds, and cooled to 30°C. To 80 parts of the soybean milk, 1 part of lactic acid bacteria (a powdered mix culture of *Lactobacillus acidophilus, Lactobacillus bulgaricus* and *Streptococcus thermophilus),* 2 parts of glucose, 1 part of flour, 0.5 part of soluble soybean polysaccharides (SOYAFIVE, manufactured by Fuji Oil Company, Limited) 0.5 part of skimmed milk powder and 0.1 part of soybean peptide (HINUTE, manufactured by Fuji Oil Company, Limited) were added, and water was added to make the total amount 100 parts. Then, the mixture was fermented in a tank at 30°C until the pH reached 4.4, sterilized at 90°C for 2 minutes, and cooled to 30°C to obtain lactic fermented soybean milk.

Then, to 100 parts of the lactic fermented soybean milk, 0.1 part of *Saccharomyces cerevisiae* as yeast and 0.02 part of an exo-type protease preparation (UMAMIZYME, manufactured by Amano Enzyme Inc.) were added, and the mixture was fermented at 30°C for 12 hours. The resulting fermented mixture was cooled to 7°C with a plate-type heat exchanger to obtain fermented soybean protein. It was homogenized at pressure of 100 kg, and heat-sterilized at 90°C for 60 seconds to obtain a bread improving agent [M]. For comparison of quality, a bread improving agent [N] was prepared under the same conditions except that the protease preparation was not used.

When 15% TCA solubility was determined to examine the degree of hydrolysis of the fermented soybean protein by protease in the improving agent [M], it was 25%. The 15% TCA solubility of the improving agent [N], which had not been reacted with the protease, was 6%.

### Experimental Example

Effect of addition of various bread improving agents to bread

According to the formulation as shown in Table 1 and the processing steps in Table 2, loafs of ordinary bread were produced on a scale of about 5 kg by straight dough method with addition of the bread improving agents [A] to [N], respectively. For the bread improving agent [A], the amount thereof to be mixed in Table 1 (10 parts) (A1) was changed to 3 parts, 7 parts, 30 parts, 40 parts or 55 parts (A2 to A6), and a loaf of bread was produced according to the same manner. As a control, a loaf of bread without addition of a bread improving agent was also produced. Strong flour (EAGLE, manufactured by NIPPON FLOUR MILLS Co., Ltd.) was used as flour, fresh yeast (Oriental Yeast, manufactured by Oriental Yeast Co., Ltd.) was used as yeast, and shortening (PAMPAS PURELE, manufactured by Fuji Oil Company, Limited) was used as fats and oils. Baked bread was allowed to stand at room temperature (10 to 20°C) overnight, and the volume was measured by a rapeseed displacement method.

**Table 1**

| Formulation of a loaf of bread | |
|---|---|
| Ingredients | Mixing amounts |
| Strong flour | 100 |
| Fresh yeast | 2.5 |
| White sugar | 5 |
| Salt | 2 |
| Skimmed milk powder | 3 |
| Shortening | 6 |
| Bread improving agent | 10 |

| | |
|---|---|
| The amounts are baker's percentages (total amount of flour is taken as 100). | |

**Table 2**

| Processing steps | |
|---|---|
| Mixing | Low speed 3 minutes → Medium speed 6 to 8 minutes |
| After adding oil | Low speed 3 minutes → Medium speed 4 minutes → Low speed 2 minutes |
| Mixing temperature | 28°C |
| Floor time | 50 minutes |
| Fermentation room | 28°C (Moisture 70%) |
| Temperature at end of fermentation | 29°C |
| Dividing weight | 220 g |
| Bench time | 20 minutes |
| Final proof time | 50 minutes |
| Final proof temperature | 38°C (Moisture 85%) |
| Baking | 230°C, 38 minutes |

The quality of the loafs of bread using the bread improving agents (A) to (M) was evaluated by 10 skilled panelist for fermented flavor, degree of bread dough softening, texture softness, retrogradation-preventing (antiaging) effect (lasting of softness), antibacterial effect (storability). The results are shown in Tables 3 and 4.

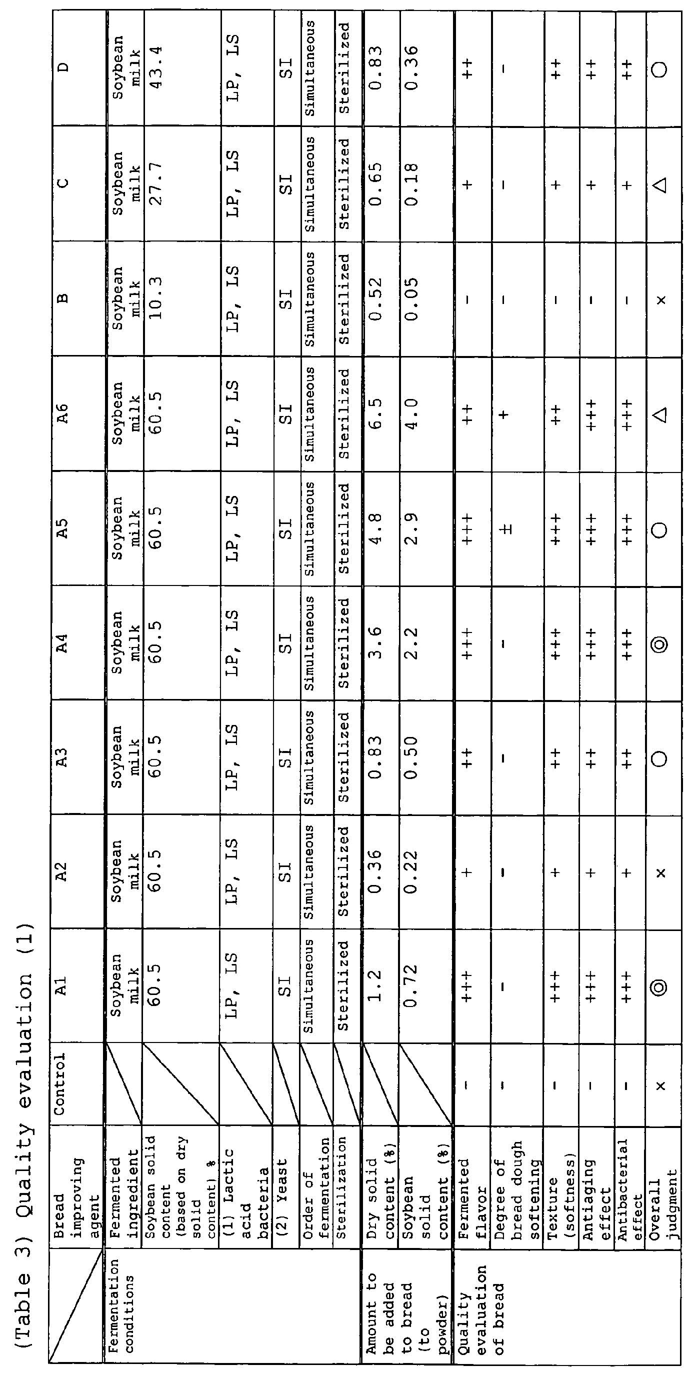

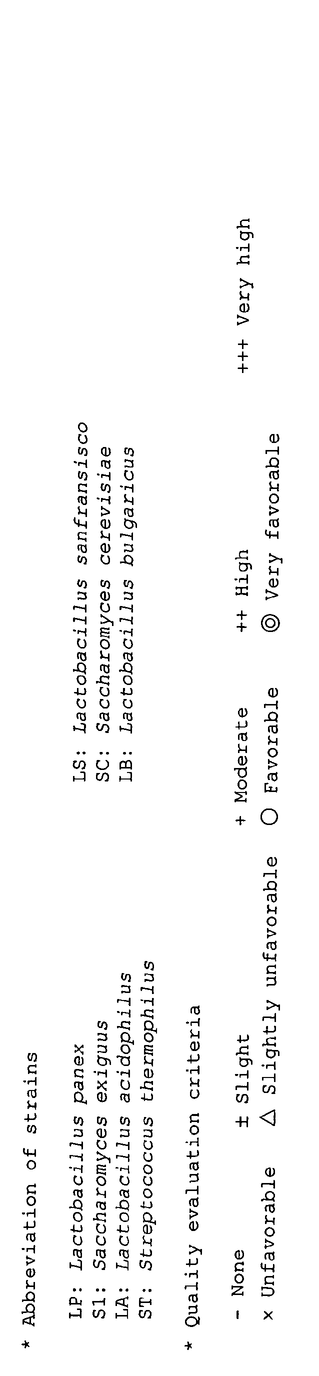

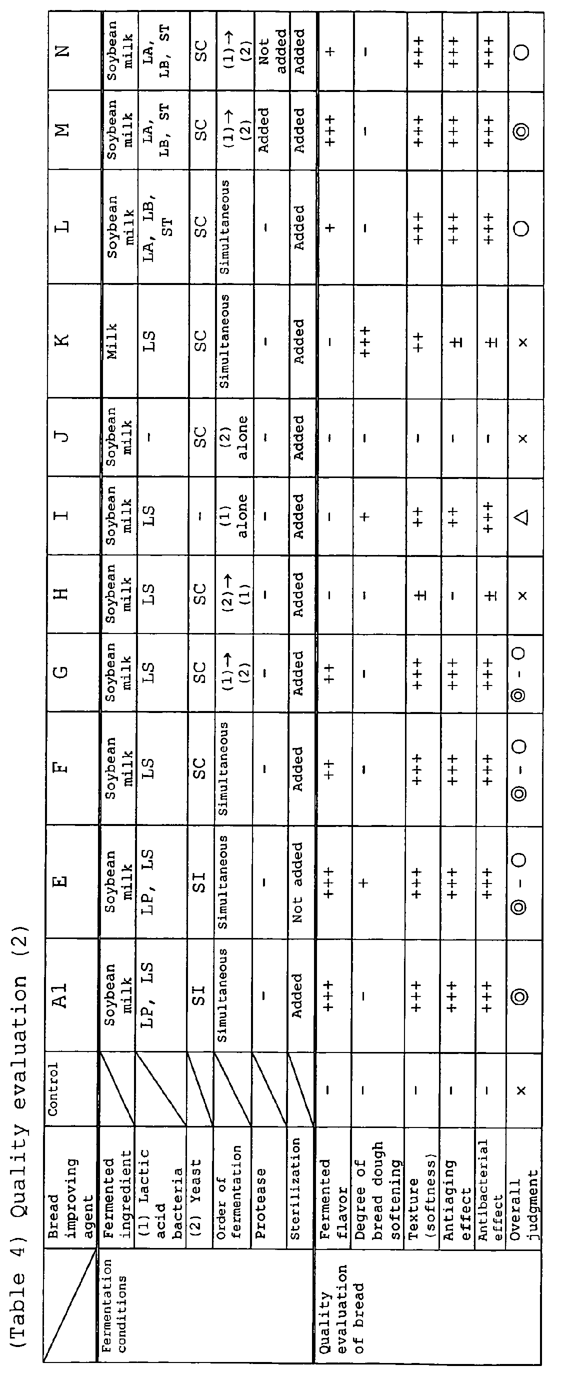

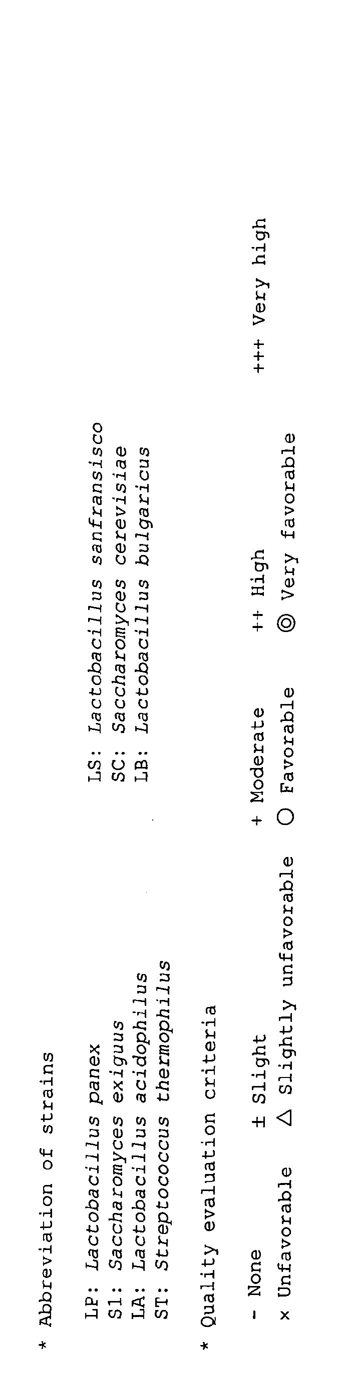

The loafs of bread added with the bread improving agents (A) to (G), and (L) to (N) had an excellent fermented flavor, less degree of excessive softening, a long-lasting soft texture and a high antibacterial effect, and thus was judged to have excellent quality. The improving agent (A) using panetone leaven imparted a tasty flavor and a rich fermented flavor, and was judged to have very favorable quality. The improving agent (M), which had been reacted with a protease, was equal to the improving agent (A), and imparted a stronger fermented flavor than the improving agent (N) that had not been reacted with a protease. The improving agent (E), which had not been sterilized, caused slightly excessive softening of the dough and slight deterioration of workability, but the flavor was very favorable, thus it was judged as sufficiently acceptable.

On the other hand, the addition of the improving agent (H), which had not undergone the lactic fermentation after yeast fermentation, and the agent (J), which had undergone the yeast fermentation alone, did not produce bread having good quality. The improving agent (I), which had undergone the lactic fermentation alone, was considerably effective in imparting long-lasting softness and antibacterial properties, but did not produce bread having a favorable fermented flavor required by the present invention. The improving agent (K) using the fermented milk slightly imparted softness, but produced a yogurt-like flavor, and tended to cause highly excessive softening of bread dough, which resulted in the deterioration of workability.

### Industrial Applicability

In bakery industry, bread is produced by cost-effective procedures that allow effective mass production. However, bread having tastier and better shelf life in view of marketing is still strongly demanded. The addition of the bread improving agent of the present invention to bread is a very effective method that fully satisfies the above demands. Accordingly, the present invention will remarkably contribute to the development of bakery industry.

## Claims

1. A bread improving agent comprising fermented soybean protein fermented by lactic acid bacteria and yeast.

2. The bread improving agent of claim 1, wherein the lactic fermentation is performed substantially simultaneously or before the yeast fermentation.

3. The bread improving agent of claim 1, wherein the lactic acid bacteria used for the lactic fermentation is derived from sour leaven.

4. The bread improving agent of claim 1, wherein the fermented soybean protein is obtained by further reacting a protease with the soybean protein.

5. The bread improving agent of claim 1, which has a pH of 4.0 to 4.8.

6. The bread improving agent of claim 1, which is sterilized.

7. Bread comprising the bread improving agent of claim 1.

8. The bread of claim 7, wherein the bread improving agent is added in an amount of 0.35 to 3.5 parts by weight in terms of a soybean solid content based on 100 parts by weight of cereal flour for bread.

9. A process for producing bread which comprises mixing fermented soybean protein fermented by lactic acid bacteria and yeast with cereal flour for bread to prepare dough.
